# EUROPEAN PATENT SPECIFICATION

(11) **EP 2 167 828 B1**
(45) Date of publication and mention of the grant of the patent: **27.02.2013**
(21) Application number: 07785949.4
(22) Date of filing: 09.07.2007
(51) Int. Cl.: F16C 33/04, F16C 33/10, F16C 33/66, F16C 17/10, F16C 19/18

(54) **BEARING ARRANGEMENT**
LAGERANORDNUNG
ENSEMBLE DE PALIER

(43) Date of publication of application: 31.03.2010
(73) Proprietor: AB SKF, 415 50 Göteborg (SE); Alfa Laval Corporate AB, 221 00 Lund (SE)
(72) Inventor: SCHWEITZER, Ferdinand, A-3352 St. Peter in der Au (AT); KLINTENSTEDT, Kjell, S-132 34 Saltsjö-Boo (SE)
(74) Representative: Schonecke, Mitja
(86) International application number: PCT/EP2007/006078
(87) International publication number: WO 2009/006920

(56) References cited:
- GB-A- 719 053
- US-A- 2 135 308
- US-A- 2 271 820
- US-A- 2 482 518
- US-A- 2 728 134

## Description

The invention relates to a bearing arrangement, comprising at least one grease-lubricated bearing with a bearing region where rolling elements are arranged, wherein the at least one bearing is an angular contact ball bearing, wherein at least one oil-collecting element for collecting basis oil of the grease is arranged near the bearing, wherein an oil transport element connects the oil-collecting element with the bearing region, wherein the oil transport element is a strip of porous material.

Bearing arrangements of this kind are well known in the state of the art. To ensure an only small amount of maintenance work the bearings of the bearing arrangement can be filled with a certain amount of grease which ensures a sufficient operation time of the bearings until maintenance activities are necessary. It is aimed for some applications that the supply with lubricant is sufficient for the whole lifetime of the bearing arrangement. Therefore a lubrication using grease is well known in the art. An example is shown in US 2 482 518 A and in GB 719 053 A. Other solutions are shown in US 2 271 820 A, in US 2 728 134 A and in US 2 135 308 A.

A problem of grease-lubricated bearings, in particular in the case of angular contact ball bearings, is that basis oil of the grease often drops out after a certain operation time of the bearing or a certain time of standstill. Consequently, the ability of the grease to lubricate the bearing deteriorates. This can even not be prevented when sealing elements are employed which should keep the oil in the bearing which drops out of the grease.

Therefore, it is an object of the invention to improve the lubrication of a bearing arrangement of the above mentioned kind so that it becomes possible to further minimize the necessary actions for maintenance of the bearing. It is aimed to supply the bearing with a filling of grease which is sufficient for the whole lifetime of the bearing arrangement. Furthermore, it should be possible to assemble the proposed device in an easy way.

The solution of this object according to the invention is characterized in that the oil-collecting element consists of a porous material being ceramic material, wherein two bearings are arranged, wherein the angle of both angular contact ball bearings are different and wherein the angle of one of the angular contact ball bearings is between 10° and 20° and the angle of the other angular contact ball bearing is between 25° and 35°.

The porous material can be e. g. aluminum oxide (Al₂O₃) or zirconium oxide (ZrO₂).

To further improve the lubrication of the bearings arrangement, at least one oil reservoir can be arranged near the bearing. The oil reservoir can be sensitive with respect to vibrations of the bearing arrangement. Specifically, the oil reservoir can be constructed to emit oil when the bearing arrangement is excited with vibrations above a defined level of intensity. This is typically the case when running up the arrangement.

The bearing arrangement can bear a shaft element relatively to a housing. In this case, the axis of the shaft element can be arranged vertically, as it is typically for separators as used e. g. in the food industry. The oil-collecting element can be arranged below the bearing. The oil reservoir can be arranged above the bearing.

The shaft element can consists of aluminium and the housing can consists of steel.

At least one bearing can have at least one sensor element to survey at least one operation parameter; the parameter can be e. g. the temperature or the magnitude of vibrations. The at least one sensor element is preferably in wireless contact with a survey station for surveying the at least one operation parameter.

The preferred application for the proposed bearing arrangement is a separator, especially in the food industry. But the proposed bearing arrangement is also advantageously useable in other applications for liquid- and/or gas-separation such as separation of fuel or lubricating oil chemical substances cleaning of for instance oil contaminated water.

The invention makes sure that the deficiencies do not become effective when basis oil drops out from the grease by which the bearings are lubricated, which takes place especially after a long time of standstill. So, a loss of ability of lubrication of the grease is prevented.

The drawings show embodiments of the invention.
- Fig. 1: shows a cross section of a bearing arrangement of a separator for the food industry according to an embodiment of the invention and
- Fig. 2: shows the cross section of a separator.

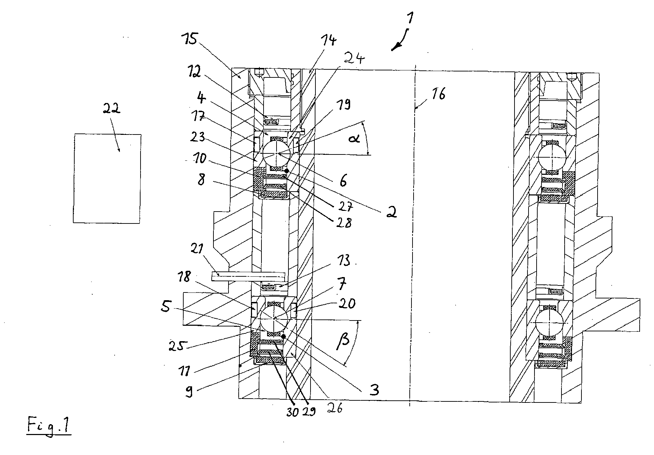

In fig. 1 a bearing arrangement 1 is shown which bears a shaft element 14 relatively to a housing 15. The axis 16 of the shaft element 14 is arranged vertically; this is typically for a separator. The bearing arrangement 1 has two annular contact ball bearing 2, 3 which are grease-lubricated. This means that a certain amount of grease in inserted into the bearing regions 4, 5. The bearing regions 4, 5 are those regions where the relevant bearing elements are located. In the case of the depicted embodiment of the invention the relevant bearing elements are the rolling elements 6, 7 (balls) of the bearings 2, 3 which are arranged between inner rings 24, 26 and outer rings 23, 25.

As can be seen from fig. 1 both bearings 2, 3 have a certain pressure angle α and β respectively, which are not equal. The upper bearing 2 has a smaller angle α (preferably 15°) than the lower bearings 3, which has the angle β (preferably 30°). The difference between both angles α, β can be up to 15°.

Below the bearings 2, 3 an oil-collecting element 8, 9 is located. This oil-collecting element 8, 9 collects oil which leaves the bearings 2, 3 in spite of the sealing elements 27, 28, 29 and 30 which are arranged to prevent the leakage of oil from the bearings 2, 3 which drops out of the grease which is introduced into the bearing region 4, 5. The oil-collecting element 8, 9 consists of a porous material, e. g. Al₂O₃.

To feed back the dropped out oil from the oil-collecting elements 8, 9 to the bearing region 4, 5 a transport element 10, 11 is arranged. The transport element 10, 11 is a strip of porous material which transfers the collected oil from the oil-collecting element 8, 9 due to a capillary effect back to the bearing region 4, 5. The transport element 10, 11 consists also of a porous material like e. g. Al₂O₃. The transport element 10, 11 can be located in a cut-in in the housing 15. The number of transport elements 10, 11 is chosen due to the desired effect of feed-back of the oil.

To improve the supply of the bearings 2, 3 with lubricant an oil reservoir 12, 13 is arranged above the bearings 2, 3. In the oil reservoir 12, 13 a certain amount of oil can be kept. In the case that the bearings arrangement 1 is excited with vibrations of a defined magnitude oil is emitted from the oil reservoir 12, 13 to the bearing 2, 3. A typical case of excitation with such vibration is the run up of the bearing arrangement 1. So, in this case a small amount of fresh oil it dispensed from the oil reservoir 12, 13 to the bearing 2, 3.

To survey the operation of the bearing arrangement 1 sensors can be employed. In the depicted embodiment a sensor element 17 and 18 is arranged in the outer ring 23, 25 of the bearings 2, 3 for sensing the temperature and/or the vibration of the bearing. Accordingly, sensor elements 19 and 20 are arranged in the inner rings 24, 26. The further sensor element 21 senses the revolution speed of the shaft element 14 relatively to the housing 15. All sensed parameters are transferred in a wireless way to a survey station 22. The survey station 22 evaluates the received data and can transfer them to a control unit of the drive system of the bearing arrangement (now shown). So, an online-survey of the bearing arrangement becomes possible. If to high vibrations and/or temperatures are detected a shut-down of the arrangement can be triggered.

By the invention the assembly of a separator becomes quite easy which uses the proposed lubrication system. It is guaranteed that the supply with lubricant takes place for a long time, preferably for the whole lifetime of the separator. A re-lubrication is ensured by the oil reservoirs 12, 13 as well as by the oil-collecting elements 8, 9 and the transport elements 10, 11.

The re-lubrication is arranged "on-board", i. e. no external re-lubrication is necessary. The lubrication takes place by using basically grease instead of oil. The re-lubrication can be triggered by a machine control device (now shown) which can be freely programmed due to the amount of re-lubricating oil and the time of re-lubrication.

The integrated sensor elements allow the survey of e. g. the pre-load in the bearings 2, 3 and the temperature in the bearings 2, 3. The sensed parameters can deliver an information about the lifetime of the lubricant.

It is possible to design the bearing arrangement and the grease filling of the bearings to ensure an efficient lubricating of the bearings arrangement over the whole lifetime of it without any external re-lubrication.

By using steel for the housing 15 and aluminum or magnesium for the shaft element 14 stress due to a different thermal expansion can be prevented.

The porous material 8, 9, 10, 11 can be filled completely with oil after completion of the assembly of the bearing arrangement.

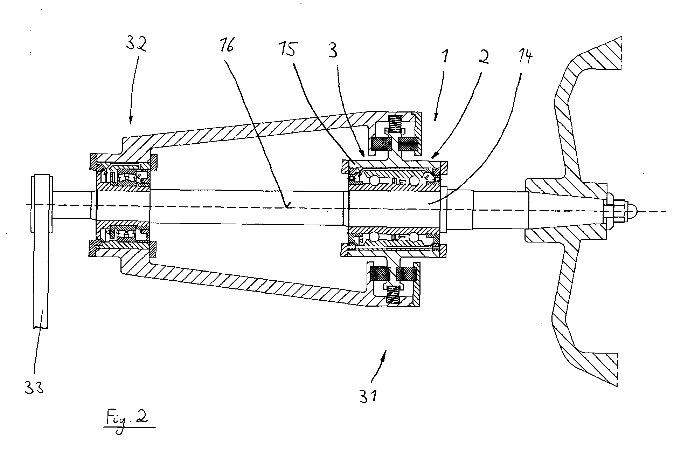

In fig. 2 the whole separator 31 is depicted, which is driven by a belt drive 33. Here, the bearing arrangement 1 according to fig. 1 is used, i. e. two bearings 2 and 3 are adjacently arranged on the shaft element 14. The shaft element 14 is hold by a further bearing arrangement 32 which is located with distance to the bearing arrangement 1. This bearing arrangement 32 can be designed according to the invention or conventionally.

Of course, different designs can be used with respect to the arrangement of bearings for holding the shaft element 14 in the housing. There can be a common housing for a plurality of bearing arrangements 1, 32 or different housing parts for the different bearing arrangements.

Further in other embodiments the above described bearing arrangement can also be applied in arrangements with other orientations of the shaft, particularly in horizontal shaft arrangements e.g. in decanters.

## Claims

1. Bearing arrangement (1), comprising at least one grease-lubricated bearing (2, 3) with a bearing region (4, 5) where rolling elements (6, 7) are arranged, wherein the at least one bearing is an angular contact ball bearing, wherein at least one oil-collecting element (8, 9) for collecting basis oil of the grease is arranged near the bearing (2, 3), wherein an oil transport element (10, 11) connects the oil-collecting element (8, 9) with the bearing region (4, 5), wherein the oil transport element (10, 11) is a strip of porous material,
**characterized in**
**that** the oil-collecting element (8, 9) consists of a porous material being ceramic material,
wherein two bearings (2, 3) are arranged, wherein the angle (α, β) of both angular contact ball bearings (2, 3) are different and wherein the angle (α) of one of the angular contact ball bearings (2) is between 10° and 20° and the angle (β) of the other angular contact ball bearing (3) is between 25° and 35°.

2. Bearing arrangement according to claim 1, **characterized in that** the porous material is aluminum oxide (Al₂O₃) or zirconium oxide (ZrO₂).

3. Bearing arrangement according to claim 1 or 2, **characterized in that** an oil reservoir (12, 13) is arranged near the bearing (2, 3).

4. Bearing arrangement according to claim 3, **characterized in that** the oil reservoir (12, 13) is sensitive with respect to vibrations of the bearing arrangement (1).

5. Bearing arrangement according to claim 4, **characterized in that** the oil reservoir (12, 13) is constructed to emit oil when the bearing arrangement (1) is excited with vibrations above a defined level of intensity.

6. Bearing arrangement according to at least one of claims 1 till 5, **characterized in that** the bearing arrangement (1) comprises sealing means (27, 28, 29, 30) for sealing the bearing region (4, 5) against a leakage of lubricant.

7. Bearing arrangement according to at least one of claims 1 till 6, **characterized in that** it bears a shaft element (14) relatively to a housing (15), wherein the axis (16) of the shaft element (14) is preferably arranged vertically.

8. Bearing arrangement according to claim 7, **characterized in that** the shaft element (14) consists of aluminium and the housing (15) consists of steel.

9. Bearing arrangement according to at least one of claims 1 till 8, **characterized in that** at least one bearing (2, 3) has at least one sensor element (17, 18, 19, 20, 21) to survey at least one operation parameter.

10. Bearing arrangement according to claim 9, **characterized in that** the at least one sensor element (17, 18, 19, 20, 21) is in wireless contact with a survey station (22) for surveying the at least one operation parameter.

11. Bearing arrangement according to at least one of claims 1 till 10, **characterized in that** it is part of a separator (31).

12. Use of a bearing arrangement according to at least one of claims 1 till 11 in the food industry.

## Patentansprüche

1. Lageranordnung (1), die mindestens ein fettgeschmiertes Lager (2, 3) mit einer Lagerregion (4, 5) umfasst, wo Wälzelemente (6, 7) angeordnet sind, wobei das mindestens eine Lager ein Kegelkugellager ist, wobei mindestens ein Ölauffangelement (8, 9) zum Auffangen von Basisöl des Fettes nahe dem Lager (2, 3) angeordnet ist, wobei ein Öltransportelement (10, 11) das Ölauffangelement (8, 9) mit der Lagerregion (4, 5) verbindet, wobei das Öltransportelement (10, 11) ein Streifen aus porösem Material ist,
**dadurch gekennzeichnet,**
**dass** das Ölauffangelement (8, 9) aus einem porösen Material besteht, bei dem es sich um ein Keramikmaterial handelt,
wobei zwei Lager (2, 3) angeordnet sind, wobei die Winkel (α, β) beider Kegelkugellager (2, 3) unterschiedlich sind und wobei der Winkel (α) von einem der Kegelkugellager (2) zwischen 10° und 20° beträgt und der Winkel (β) d es anderen Kegelkugellagers (3) zwischen 25° und 35° beträgt.

2. Lageranordnung nach Anspruch 1, **dadurch gekennzeichnet, dass** das poröse Material Aluminiumoxid (Al₂O₃) oder Zirkonoxid (ZrO₂) ist.

3. Lageranordnung nach Anspruch 1 oder 2, **dadurch gekennzeichnet, dass** ein Ölreservoir (12, 13) nahe dem Lager (2, 3) angeordnet ist.

4. Lageranordnung nach Anspruch 3, **dadurch gekennzeichnet, dass** das Ölreservoir (12, 13) auf Vibrationen der Lageranordnung (1) anspricht.

5. Lageranordnung nach Anspruch 4, **dadurch gekennzeichnet, dass** das Ölreservoir (12, 13) so konstruiert ist, dass es Öl abgibt, wenn die Lageranordnung (1) durch Vibrationen oberhalb eines festgelegten Intensitätspegels erregt wird.

6. Lageranordnung nach mindestens einem der Ansprüche 1 bis 5, **dadurch gekennzeichnet, dass** die Lageranordnung (1) Dichtungsmittel (27, 28, 29, 30) zum Abdichten der Lagerregion (4, 5) gegen das Auslaufen von Schmierstoff umfasst.

7. Lageranordnung nach mindestens einem der Ansprüche 1 bis 6, **dadurch gekennzeichnet, dass** sie ein Wellenelement (14) relativ zu einem Gehäuse (15) lagert, wobei die Achse (16) des Wellenelements (14) bevorzugt vertikal angeordnet ist.

8. Lageranordnung nach Anspruch 7, **dadurch gekennzeichnet, dass** das Wellenelement (14) aus Aluminium besteht und das Gehäuse (15) aus Stahl besteht.

9. Lageranordnung nach mindestens einem der Ansprüche 1 bis 8, **dadurch gekennzeichnet, dass** mindestens ein Lager (2, 3) mindestens ein Sensorelement (17, 18, 19, 20, 21) hat, um mindestens einen Betriebsparameter zu überwachen.

10. Lageranordnung nach Anspruch 9, **dadurch gekennzeichnet, dass** das mindestens eine Sensorelement (17, 18, 19, 20, 21) in drahtlosem Kontakt mit einer Überwachungsstation (22) zum Überwachen des mindestens einen Betriebsparameters steht.

11. Lageranordnung nach mindestens einem der Ansprüche 1 bis 10, **dadurch gekennzeichnet, dass** sie Teil einer Abscheidungsvorrichtung (31) ist.

12. Verwendung einer Lageranordnung nach mindestens einem der Ansprüche 1 bis 11 in der Lebensmittelindustrie.

## Revendications

1. Agencement (1) de palier comprenant au moins un palier (2, 3) lubrifié à la graisse et doté d'une zone de palier (4, 5) dans laquelle des éléments de roulement (6, 7) sont agencés,
le ou les paliers étant des paliers à billes à contact angulaire,
au moins un élément (8, 9) de collecte d'huile servant à recueillir l'huile de base de la graisse étant agencé à proximité du palier (2, 3),
un élément (10, 11) de transport d'huile raccordant l'élément (8, 9) de collecte d'huile à la zone de palier (4, 5),
l'élément (10, 11) de transport d'huile étant un ruban de matériau poreux,
**caractérisé en ce que**
l'élément (8, 9) de collecte d'huile est constitué d'un matériau poreux qui est un matériau céramique,
**en ce que** deux paliers (2, 3) sont agencés, l'angle (α, β) des deux paliers (2, 3) à billes à contact angulaire étant différents, l'angle (α) de l'un des paliers (2) de billes à contact angulaire étant compris entre 10° et 20° et l'angle (β) de l'autre palier (3) à billes à contact angulaire étant compris entre 25° et 35°.

2. Ensemble de palier selon la revendication 1, **caractérisé en ce que** le matériau poreux est l'oxyde d'aluminium (Al₂O₃) ou l'oxyde de zirconium (ZrO₂).

3. Ensemble de palier selon les revendications 1 ou 2, **caractérisé en ce qu'**un réservoir d'huile (12, 13) est agencé à proximité du palier (2, 3).

4. Ensemble de palier selon la revendication 3, **caractérisé en ce que** le réservoir d'huile (12, 13) est sensible aux vibrations de l'ensemble de palier (1).

5. Ensemble de palier selon la revendication 4, **caractérisé en ce que** le réservoir d'huile (12, 13) est configuré de manière à émettre de l'huile lorsque l'ensemble de palier (1) est excité par des vibrations qui dépassent un niveau défini d'intensité.

6. Ensemble de palier selon au moins l'une des revendications 1 à 5, **caractérisé en ce que** l'ensemble de palier (1) comprend des moyens d'étanchéité (27, 28, 29, 30) qui empêchent que la zone de palier (4, 5) présente des fuites de lubrifiant.

7. Ensemble de palier selon au moins l'une des revendications 1 à 6, **caractérisé en ce qu'**il porte un élément d'arbre (14) par rapport à un boîtier (15), l'axe (16) de l'élément d'arbre (14) étant agencé de préférence à la verticale.

8. Ensemble de palier selon la revendication 7, **caractérisé en ce que** l'élément d'arbre (14) est réalisé en aluminium et le boîtier (15) en acier.

9. Ensemble de palier selon au moins l'une des revendications 1 à 8, **caractérisé en ce qu'**au moins un palier (2, 3) présente au moins un élément de détection (17, 18, 19, 20, 21) qui surveille au moins un paramètre de fonctionnement.

10. Ensemble de palier selon la revendication 9, **caractérisé en ce que** le ou les éléments de détection (17, 18, 19, 20, 21) sont en contact sans fil avec un poste de surveillance (22) qui surveille le ou les paramètres de fonctionnement.

11. Ensemble de palier selon au moins l'une des revendications 1 à 10, **caractérisé en ce qu'**il fait partie d'un séparateur (31).

12. Utilisation d'un ensemble de palier selon au moins l'une des revendications 1 à 11 dans le secteur alimentaire.
